# EUROPEAN PATENT SPECIFICATION

(11) **EP 0 776 767 B1**
(45) Date of publication and mention of the grant of the patent: **16.06.1999**
(21) Application number: 96118788.7
(22) Date of filing: 22.11.1996
(51) Int. Cl.: B41M 5/00, D21H 17/28, D21H 21/16

(54) **Ink-jet recording sheet and a method for its preparation**
Tintenstrahlaufzeichnungsschicht und Verfahren zu deren Herstellung
Feuille pour l'enregistrement par jet d'encre et procédé pour sa fabrication

(30) Priority: 01.12.1995 US 566099
(43) Date of publication of application: 04.06.1997
(73) Proprietor: National Starch and Chemical Investment Holding Corporation, Wilmington, Delaware 19809 (US)
(72) Inventor: Trksak, Ralph M., Manville, New Jersey 08835 (US)
(74) Representative: Hagemann, Heinrich, Dr.rer.nat., Dipl.-Chem.

(56) References cited:
- EP-A- 0 524 635
- EP-A- 0 603 727
- WO-A-94/01619

## Description

This invention is directed to the production of improved recording materials for use in ink-jet printing. More particularly, the present invention relates to the method of preparing ink-jet recording or printing sheets, such as paper, that are coated with a selected hydrophobic starch applied at a high (low-shear) viscosity.

Ink-jet printing of paper can be achieved through two general methods. The first type is the continuous stream method, where a continuous stream of ink is jetted through a small nozzle (typically about 50 µm (microns) in diameter) onto a substrate. The stream is perturbed, causing it to break into droplets at a fixed distance from the orifice. The droplets are guided to a specific location on the recording material by electrodes that charge the passing droplets, or are deflected to a gutter for reevaluation and reuse. This process is described in U.S. Patent Nos. 4,255,754; 4,698,123 and 4,751,517.

The second type of ink-jet printing is called "drop-on-demand". In this method, a droplet is expelled from an orifice of an ink-jet printer directly to a position on a recording medium, but only when needed ("on demand"). One type of drop-on demand printing method uses a piezoelectric transducer to produce pressure pulses to expel the ink drops. A second type of drop-on-demand printing method uses thermal action induced by a heat generating resistor near the nozzle to generate drops as needed. This method has been described as the "bubble jet" method and is described in U.S. Patent Nos. 4,500,895; 4,513,298 and 4,794,409.

The ink-receiving layers on ink-jet recording materials must meet demanding and often conflicting requirements. The ink-receiving layers must readily absorb the ink, but not allow the dots of ink applied to expand more than necessary to obtain an image with high optical density. The ink-receiving layer must also rapidly absorb the ink applied so that it will not feather or smudge when touched soon after application, but not allow the ink to penetrate so far as to show through the other side of the recording element.

To meet these requirements, many variations in ink-receptive layers have been disclosed in the prior art. While some of these ink-receptive layers meet the above listed demands of ink-jet recording, they are usually very expensive and require unusual or extensive processing. The most effective types of ink-receptive coatings include high surface area pigments such as fumed silicas or hydrated aluminas that are bound with polymers such as polyvinyl alcohol or polyvinyl pyrrolidone. While these combinations of polymers and pigments are effective in improving the quality of ink-jet prints made on recording materials, they are very expensive, are difficult to disperse and their coatings are very difficult to dry after application on paper. This oftentimes necessitates their application on slow, off-machine coaters which further increases the cost of the recording media containing them. Ink-jet paper coated with such expensive pigments typically sell for ten times the price of a high quality copy paper.

Starch, a relatively inexpensive material, is well known as a coating or surface size for paper. However, starch alone has not been able to significantly enhance ink-jet print quality. Expensive synthetic chemicals are often added to starch to increase the hydrophobicity of the paper surface. Additionally, the ability to apply starch in conventional size presses under different conditions, particularly high viscosity, has been limited because of what has been termed poor "runnability". Starches have typically been used to coat or surface size paper by passing the paper through the nip formed between two rolls. When using starch at high viscosities, undesirable running conditions such as "nip rejection" develop. Nip rejection is simply the spitting or rejection of the starch cook from the press nip between the rotating size press rolls during operation of the paper machine. Starch that spits from the nip can land on the dryer cans situated after the size press, causing the sheet to stick to these cans and tear. Also, this starch can land on the sheet after the size press and cause uneven pickup on the sheet resulting in uneven and poor print quality across the sheet surface.

What is needed is a starch based product that can be applied on a paper machine size press and provide improved ink-jet quality at low cost, without the need for the addition of expensive synthetic chemicals.

It has now been found that selected hydrophobic starch derivatives can be applied at a high viscosity to coat or surface size an ink-jet recording material and provide significantly improved printing quality. More particularly, this invention involves a method for preparing an ink-jet recording sheet with improved ink-jet print quality comprising:
a) providing a recording sheet substrate,
b) forming a sizing composition comprising an aqueous dispersion of a hydrophobic starch ester or ether derivative wherein the ester or ether substituent comprises a saturated or unsaturated hydrocarbon chain of 6 to 22 carbon atoms and the starch containing sizing composition has a viscosity of at least 50 mPa.s (cps) Brookfield at 65°C,
c) applying said sizing composition to said recording sheet substrate, and
d) drying said substrate to provide an ink-jet recording sheet.

This invention involves two significant aspects. First, that the use of the selected hydrophobic starch derivatives, as defined herein, can be applied using conventional paper machine size presses at viscosities higher than those previously considered to be operable or runnable. Second, and most important, when applied at these high viscosities, significant and unexpected improvements are obtained in the ink-jet print quality of the coated or surface sized recording sheets.

The hydrophobic starch derivatives used in this invention are starch ester or ether derivatives wherein the ester or ether substituent comprises a saturated or unsaturated hydrocarbon chain of 6 to 22 carbon atoms, preferably 8 to 20 carbon atoms. It should be understood that the hydrocarbon chain may contain some branching. It should also be understood that the ester or ether substituent may contain other groups in addition to the hydrocarbon chain as long as such groups do not interfere with the hydrophobic properties of the substituent. The hydrocarbon or hydrophobic substituent group may be alkyl, alkenyl, aryl, aralkyl or aralkenyl with alkyl and alkenyl being preferred.

The base starch material used herein may be any of several granular starches, native or converted. Such starches include those derived from any plant source including corn, potato, wheat, rice, sago, tapioca, waxy maize, sorghum and high amylose starch such as high amylose corn, i.e., starch having at least 40% and more particularly at least 65% amylose content by weight, etc. Starch flours may also be used. Also included are the conversion products derived from any of the former bases such as, for example, dextrins prepared by hydrolytic action of acid and/or heat; fluidity or thin boiling starches prepared by enzyme conversions or mild acid hydrolysis; and oxidized starches prepared by treatment with oxidants such as sodium hypochlorite.

The hydrophobic starch derivatives used in this invention are prepared by reacting starch with selected reagents.

A suitable class of reagents for preparing esters useful herein include substituted cyclic dicarboxylic acid anhydrides such as those described in U.S. Patent No. 2,661,349 (issued on December 1, 1953 to Caldwell et al.) having the structure: 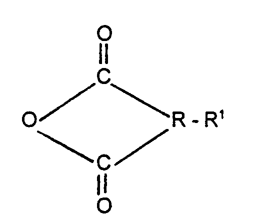 wherein R is a dimethylene or trimethylene radical and R¹ comprises a hydrocarbon chain of at least 6, more particularly 6 to 22 and preferably 8 to 20 carbon atoms. The substituent R¹ group may be alkyl, alkenyl, aryl, aralkyl or aralkenyl with alkyl and alkenyl being preferred. The substituted cyclic dicarboxylic acid anhydrides falling within the above structural formula are the substituted succinic and glutaric acid anhydrides. In addition to the hydrocarbon chain substituent, other substituent groups such as sulfonic acid or lower alkyl groups which would not affect sizing performance may be present.

Another suitable class of reagents for preparing derivatives useful herein include the imidazolides or N,N'-disubstituted imidazolium salts of carboxylic or sulfonic acids such as those described in U.S. Patent No. Re 28,809 (issued May 11, 1976 to M. Tessler) which is a reissue of U.S. Patent No. 3,720,663 (issued on March 13, 1973 to M. Tessler) and U.S. Patent No. 4,020,272 (issued April 26, 1977 to M. Tessler) having the general formula: 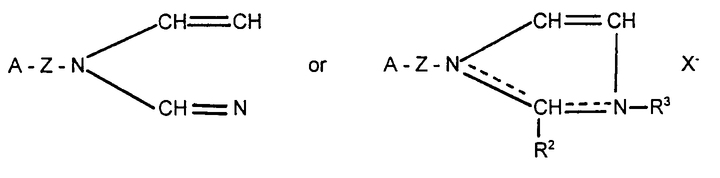 wherein Z is 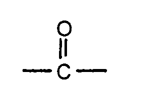 or - SO₂ -. A comprises a hydrocarbon chain of at least 6, more particularly 6 to 22, preferably 8 to 20 carbon atoms. R² is H or C₁-C₄ alkyl. R³ is C₁-C₄ alkyl, and X⁻ is an anion.

A third class of reagents useful herein include the etherifying reagents described in U.S. Patent No. 2,876,217 (issued on March 3, 1959 to E. Paschall) comprising the reaction product of an epihalohydrin with a tertiary amine having the structure: 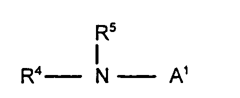 wherein R⁴ and R⁵ are independently H or a C₁-C₄ alkyl and A¹ comprises a hydrocarbon chain of at least 6, more particularly 6 to 22, preferably 8 to 20 carbon atoms.

The starch esterification or etherification reactions may be conducted by a number of techniques known in the art and discussed in the literature employing, for example, an aqueous reaction medium, an organic solvent medium, or a dry heat reaction technique. See, for example, R. L. Whistler, Methods in Carbohydrate Chemistry, Vol. IV, 1964, pp. 279-311; R. L. Whistler et al., Starch, Chemistry and Technology, Second Edition, 1984, pp. 311-366; and R. Davidson and N. Sittig, Water-Soluble Resins, Second Edition, 1968, Chapter 2. The starch derivatives herein are preferably prepared employing an aqueous reaction medium at temperatures between 20° and 45°C.

For use herein, the starch derivatives may be produced either in gelatinized or ungelatinized form. The advantage of having the derivative in ungelatinized form is that it may be filtered, washed, dried and conveyed to the mill in the form of a dry powder.

When employing the cyclic dicarboxylic acid anhydride reagents, starch is preferably treated in granular form with the reagents in an aqueous alkali medium at a pH not lower than 7 nor higher than 11. This may be accomplished by suspending the starch in water, to which has been added (either before or after the addition of the starch) sufficient base such as alkali metal hydroxide, alkaline earth hydroxide, quaternary ammonium hydroxide, or the like, to maintain the mixture in an alkaline state during the reaction. The required amount of the reagent is then added, agitation being maintained until the desired reaction is complete. Heat may be applied, if desired, in order to speed the reaction; however, if heat is used, temperatures of less than about 40°C should be maintained. In a preferred method, the alkali and the anhydride reagent are added concurrently to the starch slurry, regulating the rate of flow of each of these materials so that the pH of the slurry remains preferably between 8 and 11.

Due to the greater hydrophobic nature of certain of the substituted cyclic dicarboxylic acid anhydride reagents useful herein (i.e., those having C₁₀ or higher substituents), the reagents react with starch in only minor amounts in standard aqueous reactions. In order to improve the starch reaction efficiency, starch is reacted with the hydrophobic reagent under standard aqueous conditions in the presence of at least 5%, preferably 7 to 15% (based on the weight of the reagent), of a water-soluble organic quaternary salt which is employed as a phase transfer agent. The organic salts, of which trioctylmethyl ammonium chloride or tricaprylylmethyl ammonium chloride are preferably employed, are described in U.S. Patent No. 3,992,432 (issued November 16, 1976 to D. Napier et al.)

The proportion of etherifying or esterifying reagent used will vary with the particular reagent chosen (since they naturally vary in reactivity and reaction efficiency), and the degree of substitution desired. Thus, substantial improvements in sizing efficiency and ink-jet print quality have been achieved by using a derivative made with at least 2% of the reagent, based on the weight of the starch. Depending on the particular derivative being formed, the upper limit of treatment will vary and is limited only by the solubility or dispersibility of the final product. Generally the maximum level will be less than 25%. More particularly, from about 2 to 20%, preferably about 3 to 15% and more preferably about 3 to 10% by weight of reagent based on the weight of the starch is used to prepare the starch derivative. The starch derivatives used in this invention can be better defined as those starches having a degree of substitution (DS) of from about 0.02 to 0.1, more particularly from 0.03 to 0.1 and preferably from about 0.03 to 0.07. The term "degree of substitution" (DS) as used herein indicates the average number of sites per anhydroglucose unit of the starch molecule on which there are substituted groups.

An important consideration in the successful application of the selected hydrophobic starch derivatives as described herein, in the preparation of high quality ink-jet recording material, is the viscosity of the starch derivative. Particularly useful viscosities at which the hydrophobic starch derivatives have been found to provide operable or runnable size press conditions as well as improved ink-jet quality in the coated recording sheets are Brookfield viscosities of at least 50 cps and more particularly 50 to 500 mPa.s (cps) at 65°C. Preferably the viscosity will be 100 to 300 mPa.s (cps) Brookfield at 65°C. This viscosity was determined using a Brookfield Viscometer (Model LVDV-III), fitted with an SC4-21 spindle at 100 rpm and 65°C (150°F).

The viscosity chosen will depend on the speed of the paper machine; higher viscosities are applicable to slower paper machines while the lower range of viscosity is more suited to the faster paper machines. Paper machine speeds typically are in the range of from about 2,54 to 15,24 m/s (500 to 3000 ft/min) and more particularly from about 4,064 to 7,62 m/s (800 to 1500 ft/min.)

In practice, it has been found that the hydrophobic starch derivatives can be effectively applied to the surface of a previously prepared paper or paperboard web by means of any conventional surface sizing technique. Included among these techniques are size press, tub, gate roll applicators and calendar stack sizing procedures. Thus, for example, in a size press technique surface sizing is accomplished by passing the web of paper in a vertical direction downward between a pair of press rolls. In the nip between these rolls, a flow of surface size solution is directed in such a manner as to form ponds on both sides of the paper. As the paper moves between the rolls, excess surface size solution is metered off. The sized web is then dried by means of any conventional drying operation selected by the practitioner.

The amount of hydrophobic starch derivative to be used in an aqueous dispersion will be from about 3 to 20% and more preferably from about 5 to 12% by weight. Whatever starch composition or method of application, it will be sufficient to provide a pick-up of the starch derivative of from about 2 to 10% by weight, preferably 3 to 7%, based on the dry paper weight. Within the mentioned range, the precise amount of the size or starch derivative will depend for the most part upon the type of pulp which is being treated, the particular grade of ink-jet printing paper being manufactured, the specific operating conditions, as well as the particular end use for which the paper product is destined.

The selected hydrophobic starch derivatives may be successfully utilized for the surface sizing or coating of various substrate materials which are used in providing ink-jet recording sheets or paper. Suitable substrates include paper and thermoplastic resin films and other material useful in transparencies. Paper which is the most common substrate is prepared from both cellulosic and combinations of cellulosic with noncellulosic fibers. The hardwood or softwood cellulosic fibers which may be used include bleached and unbleached sulfate (Kraft), bleached and unbleached sulfite, bleached and unbleached soda, neutral sulfite semi-chemical, chemi-groundwood, and any combination of these fibers. These designations refer to wood pulp fibers which have been prepared by means of a variety of processes which are used in the pulp and paper industry. In addition, synthetic cellulose fibers of the viscose rayon or regenerated cellulose type can also be used, as well as recycled waste papers from various sources.

All types of paper dyes and tints, pigments and fillers may be added to the paper (in the usual manner) which is to be sized or coated by the starch dispersion according to the present invention. Such materials include clay, talc, titanium dioxide, calcium carbonate, calcium sulfate, silicas and diatomaceous earths. The paper can contain other additives, including rosin, alum, and internal sizing compositions such as alkenyl succinic anhydride and alkyl ketene dimer. Other surface sizing agents as well as pigments, dyes and lubricants can also be used in conjunction with the size described herein. The added materials as described above may be used, as long as they do not detrimentally effect the sizing and hydrophobic properties of the prepared ink-jet recording sheet or the ink-jet printing quality of the sheet as well as the operability of the papermaking operation.

While the base paper used can be acid or alkaline grade, the greatest improvement in ink-jet printing quality will be seen on alkaline paper grades. Alkaline paper is generally prepared in wet end systems having a pH of from 7.5 to 10.5 and more particularly 7.5 to 9.0. Alkaline paper often contains significant amounts of calcium carbonate, for example 1 to 30% by weight. It is also noted that the alkaline paper substrates useful in this invention will not contain any multivalent metal ions.

The following examples further illustrate the embodiments of this invention. In these examples, all parts are given by weight and all temperatures in degrees Celsius unless otherwise noted.

### Example 1

The ability of a starch reacted with hydrophobic reagent groups to reduce paper porosity compared to a conventional surface size starch was shown as follows.

An OSA (octenyl succinic acid anhydride) waxy starch was prepared in the following manner. About 100 parts of waxy starch was slurried in 150 parts of water and the pH adjusted to 7.5 by the addition of dilute sodium hydroxide (3%). A total of 3 parts octenyl succinic acid anhydride (OSA) reagent was slowly added to the agitated starch slurry with the pH maintained at 7.5 by the metered addition of the dilute sodium hydroxide. After the reaction was complete the pH was adjusted to about 5.5 with dilute hydrochloric acid (3 : 1). The starch was thereafter recovered by filtration, washed three times with water and air dried. The final product had an OSA content of about 2.5%.

A sample of the prepared starch, i.e., 10% solids 40 WF OSA waxy starch was applied to the surface of an unsurface sized alkaline fine paper. "WF" refers to water fluidity and was measured using a Thomas Rotational Shear-Type Viscometer (manufactured by Arthur H. Thomas Co., Philadelphia, PA) in accordance with standard procedures such as disclosed in U.S. Patent No. 4,499,116 issued February 12, 1985 to Zwiercan et al. Another sample of conventional 80 WF hydroxyethylated corn starch was also applied to an unsurface sized alkaline fine paper.

The surface sizing application was performed using a size press simulator composed of two heated, rubber-coated stainless steel rolls that were arranged in the format of a horizontal size press, where paper is fed vertically through the nip between the rolls. A pond of the surface size starch (pre-heated to 65.6°C) was recirculated between the rolls at a rate of 33,33 cm³/s (2 liters/minute) in order to maintain a pond in the nip between the rolls. An alkaline base stock containing 5.4% precipitated calcium carbonate (PCC) filler and having an internal sizing level of 49 seconds (as per TAPPI Test Method T530 pm - 89, "Size Test for Paper by Ink Resistance ("Hercules Method:)) was attached to a 1 meter long unbleached kraft leader sheet. The leader was placed between 1 meter long unbleached kraft leader sheet. The leader was placed between the rolls, the size press solution recirculation pump was started, then the motor driving the size press rolls was turned on, accelerating to a speed of 100 meters/minute by the time the alkaline base stock reached the size press nip. The then surface-sized sheet was removed from the leader and dried on a photographic-type drum drier. The final sheet was cut to 0,2159 x 0,2794 m (8½ x 11 inches.)

Each sheet's porosity was evaluated using TAPPI Method T460. This test gives what is called "Gurley Density" and is performed as follows:

**Gurley Density** - this test is a measure of the air resistance (or porosity) of a sized paper sheet, which is conducted in accordance with TAPPI Standard Method T 460-OM-86, entitled "Air Resistance of Paper". Briefly, a sample of the sized paper having an area of 1 in² (6.45 cm²) is placed at the outlet end of an apparatus containing an open cylinder filled with air at ambient pressure (1 atm). The air is then forcibly expelled through the paper under the weight of the cylinder; the time for 100 cc of air to pass through the sample is recorded.

Time for 100 cc of air to pass through the sample is a relative measure of paper porosity, and the more porous papers will have lower Gurley Density times. In general, the better externally sized paper will have lower porosity (or higher Gurley Density test times).

The sized paper was then subjected to the above determinations. The results of this analysis is given in the table below (average of two sheets for each surface size starch type).

| **Starch Description** | **% Solids** | **65°C Brookfield (cps) mPa.s** | **Gurley Density - Seconds (as per TAPPI T460)** |
|---|---|---|---|
| 80 WF hydroxyethylated corn | 10.0 | 32 | 11.5 |
| 40 WF OSA Waxy | 10.0 | 120 | 30.0 |

The alkaline base stock surface sized with the 40 WF OSA waxy reduced porosity twice as effectively as the 80 WF hydroxyethylated corn. It is noted that surface size starch that helps to reduce paper porosity tends to form a more continuous, defect-free film. This continuous film being comprised of a generally ink receptive polymer, would be more able to capture the ink droplets as they are applied to the paper, preventing their migration through the Z-direction (or thickness) of the paper as well as preventing migration along the papers surface (also called feathering).

### Example 2

Using the same surface sizing methods as in Example 1, an alkaline base stock having an internal sizing level of 200 seconds (as per TAPPI Test Method T 530 pm - 89, "Size Test For Paper by Ink Resistance ("Hercules Method")) was surface-sized with 10% dispersions of both a hydroxyethylated corn as well as a 55 WF waxy starch reacted with 5% of DDSA (dodecenyl succinic anhydride). The results of this study are tabulated below:

| **Starch Description** | **% Solids** | **65°C Brookfield (cps) mPa.s** | **Gurley Density - Seconds (as per TAPPI T460)** |
|---|---|---|---|
| 80 WF hydroxyethylated corn | 10.0 | 36 | 15.3 |
| 55 WF DDSA Waxy | 10.0 | 200 | 174.8 |

Compared to the alkaline base stock surface sized with the 80 WF hydroxyethylated corn, the alkaline base stock surface sized with the 55 WF DDSA waxy gave over ten times higher density value in seconds (as per TAPPI T460).

### Example 3

Using the same surface sizing methods as in Example 1, an alkaline base stock having an internal sizing level of 200 seconds (as per TAPPI Test Method T 530 pm -89, noted above) and a CC filer content of 11.8% was surface-sized with 10% dispersions of either an 80 WF oxidized corn starch or a 40 WF waxy starch reacted with 3% OSA. The results of this study are tabulated below.

| **Starch Description** | **% Solids** | **65°C Brookfield (cps) mPa.s** | **Gurley Density Seconds (as per TAPPI T460)** |
|---|---|---|---|
| 80 oxidized corn | 10.0 | 36 | 33.1 |
| 40 WF OSA Waxy | 10.0 | 96 | 60.8 |

Compared to the alkaline base stock surface sized with the 80 WF oxidized corn starch, the alkaline base stock surface sized with the 40 WF OSA waxy gave nearly twice the density value in seconds (as per TAPPI T460).

This example indicates that paper surface-sized with a layer comprised of a starch substituted with selected hydrophobic groups that is applied at a low-shear viscosity of at least 50 mPa.s (cps at 65°C)) will reduce paper porosity, as compared to paper surface-sized with starches that are not substituted with such groups.

### Example 4

Using the same surface sizing method and alkaline base stock as in Example 1, surface-sizing was performed with blends of cationic starch (reacted with a tertiary amine group) (Cat.) and a starch reacted with OSA. The nitrogen level (of the cationic starches), the OSA level, the percent of cationic starch in the blend (the balance of the blend is the percent of OSA-treated starch), the fluidity (WF) of the cationic, the WF of the OSA (or hydrophobic) starch and the percent solids of the dispersion applied to the paper were varied as per a two-factor experimental design. The sample sized paper sheets were then evaluated as follows. Gurley density was determined for each sample sheet as in Example 1. Sample sheets were printed on a Hewlett-Packard DeskJet 500C ink-jet printer using a test pattern provided by Hewlett-Packard. On this pattern were a series of three 1 inch squares, two of which were presented at maximum coverage of ink (100%). The optical density for each sample sheet was measured on a MacBeth Densitometer with the results shown below.

| **Cat. Starch WF** | **Cat. Starch % N** | **Hydrophobic Starch WF** | **% OSA Treatment of Hydrophobic Starch** | **% Cat. Starch In Blend** | **% Total Solids** | **Brookfield Visc. (100 RPM) @ 65°C** | **Gurley density (Sec)** | **Optical** Density **Solid Black Print (100%)** |
|---|---|---|---|---|---|---|---|---|
| n/a | n/a | 40 | 3 | 0 | 6 | 68 | 13.50 | 1.15 |
| n/a | n/a | 40 | 3 | 0 | 10 | 108 | 25.38 | 1.26 |
| 70 | 0.2 | 70 | 3 | 70 | 10 | 72 | 10.75 | 1.11 |
| 70 | 0.2 | 70 | 3 | 70 | 6 | 40 | 8.56 | 1.11 |
| 40 | 0.4 | 40 | 3 | 70 | 10 | 220 | 15.73 | 1.11 |
| 70 | 0.4 | 70 | 6 | 70 | 10 | 120 | 14.93 | 1.11 |
| 70 | 0.4 | 70 | 6 | 70 | 6 | 56 | 11.44 | 1.11 |
| 40 | 0.2 | 40 | 6 | 70 | 6 | 100 | 11.20 | 1.11 |
| 40 | 0.2 | 40 | 6 | 70 | 10 | 480 | 20.96 | 1.11 |
| 40 | 0.4 | 40 | 3 | 70 | 6 | 118 | 10.15 | 1.11 |
| 70 | 0.2 | 40 | 3 | 40 | 6 | 60 | 9.70 | 1.11 |
| 70 | 0.2 | 40 | 3 | 40 | 10 | 10 | 13.15 | 1.11 |
| 40 | 0.4 | 70 | 3 | 40 | 6 | 76 | 10.68 | 1.11 |
| 40 | 0.4 | 70 | 3 | 40 | 10 | 156 | 12.70 | 1.11 |
| 70 | 0.4 | 40 | 6 | 40 | 6 | 108 | 16.22 | 1.11 |
| 70 | 0.4 | 40 | 6 | 40 | 10 | 266 | 25.73 | 1.11 |
| 40 | 0.2 | 70 | 6 | 40 | 6 | 66 | 18.02 | 1.10 |
| 40 | 0.2 | 70 | 6 | 40 | 10 | 124 | 22.29 | 1.11 |
| Blank (un-surface-sized sheet) | | | | | | | 5.5 | 1.19 |

This test data shows that a hydrophobically modified starch, in accordance with this invention, reduces paper porosity (Gurley Density) when applied at higher Brookfield viscosities. Additionally, this data shows that the optical density of a solid black printed box was highest when only the hydrophobically substituted starch was used at a high viscosity in place of a blend of cationic starch and hydrophobically substituted starch. Blends of cationic and hydrophobic starch, even when applied at a viscosity above 50 cps, did not improve the optical density of the black area, compared to the unsurface-sized base sheet.

Thus, in order to improve ink-jet print quality, it is necessary to use the selected hydrophobic starches of this invention at high Brookfield application viscosities.

## Claims

1. A method for preparing an ink-jet recording sheet with improved ink-jet print quality comprising:
a) providing a recording sheet substrate,
b) forming a sizing composition comprising an aqueous dispersion of a hydrophobic starch ester or starch ether derivative wherein the ester or ether substituent comprises a saturated or unsaturated hydrocarbon chain of 6 to 22 carbon atoms having a degree of substitution (DS) of from 0.03 to 0.1 and the starch containing sizing composition has a Brookfield viscosity of at least 50 mPa.s (cps) at 65°C and an alkaline pH of from 7.5 to 10.5,
c) applying said sizing composition to said recording sheet substrate, and
d) drying said substrate to provide an ink-jet recording sheet.

2. The method of Claim 1 wherein the starch containing sizing composition has a Brookfield viscosity of 50 to 500 mPa.s (cps) at 65°C.

3. The method of Claim 2 wherein the aqueous dispersion comprises from about 1 to 20% by weight of the derivative in water.

4. The method of Claim 1 wherein the starch derivative is an ester prepared from a substituted cyclic dicarboxylic acid anhydride having the structure: 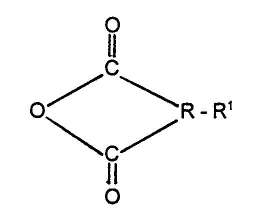 wherein R is a dimethylene or trimethylene group and R¹ is a hydrocarbon group having 6 to 22 carbon atoms.

5. The method of Claim 1 wherein the recording sheet substrate is paper.

6. The method of Claim 4 wherein R¹ is an alkyl, alkenyl, aryl, aralkyl or aralkenyl group wherein the starch derivative has a Brookfield viscosity of 50 to 500 mPa.s (cps) at 65°C and a degree of substitution of 0.03 to 0.07.

7. The method of Claim 6 wherein R¹ is an alkyl or alkenyl group of 8 to 20 carbon atoms and the aqueous dispersion comprises from about 1 to 20% by weight of the starch derivative in water.

8. The method of Claim 7 wherein the starch derivative has a Brookfield viscosity of 100 to 300 mPa.s (cps) at 65°C.

9. The method of Claim 8 wherein the recording sheet substrate is alkaline grade paper and the aqueous dispersion comprises from about 5 to 12% by weight of the starch derivative in water.

10. The ink-jet recording sheet prepared by the method of any of the preceding claims.

## Patentansprüche

1. Verfahren zur Herstellung eines Tintenstrahlaufnahmeblatts mit verbesserter Tintenstrahldruckqualität, umfassend:
a) Bereitstellen eines Aufnahmeblattsubstrats,
b) Ausbilden einer Schlichtezusammensetzung, umfassend eine wässerige Dispersion eines hydrophoben Stärkeester- oder Stärkeetherderivats, worin der Ester- oder Ethersubstituent eine gesättigte oder ungesättigte Kohlenwasserstoffkette von 6 bis 22 Kohlenstoffatomen umfaßt, mit einem Substitutionsgrad (DS) von 0,03 bis 0,1, wobei die Stärke enthaltende Schlichtezusammensetzung eine Brookfield-Viskosität von mindestens 50 mPas (cPs) bei 65°C und einen alkalischen pH-Wert von 7,5 bis 10,5 besitzt,
c) Aufbringen der Schlichtezusammensetzung auf das Aufnahmeblattsubstrat und
d) Trocknen des Substrats, um ein Tintenstrahlaufnahmeblatt zur Verfügung zu stellen.

2. Verfahren nach Anspruch 1, worin die Stärke enthaltende Schlichtezusammensetzung eine Brookfield-Viskosität von 50 bis 500 mPas (cPs) bei 65°C besitzt.

3. Verfahren nach Anspruch 2, worin die wässerige Dispersion etwa 1 bis 20 Gew.-% des Derivats in Wasser umfaßt.

4. Verfahren nach Anspruch 1, worin das Stärkederivat ein Ester ist, der aus einem substituierten zyklischen Dicarbonsäureanhydrid mit der Struktur: 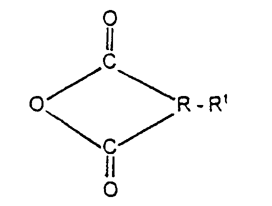 hergestellt wird, worin R eine Dimethylen- oder Trimethylengruppe und R¹ eine Kohlenwasserstoffgruppe mit 6 bis 22 Kohlenstoffatomen ist.

5. Verfahren nach Anspruch 1, wobei das Aufnahmeblattsubstrat Papier ist.

6. Verfahren nach Anspruch 4, worin R¹ eine Alkyl-. Alkenyl-, Aryl-, Aralkyl- oder Aralkenylgruppe ist, worin das Stärkederivat eine Brookfield-Viskosität von 50 bis 500 mPas (cPs) bei 65°C und einen Substitutionsgrad von 0,03 bis 0,07 besitzt.

7. Verfahren nach Anspruch 6, worin R¹ eine Alkyl- oder Alkenylgruppe von 8 bis 20 Kohlenstoffatomen ist und die wässerige Dispersion etwa 1 bis 20 Gew.-% des Stärkederivats in Wasser umfaßt.

8. Verfahren nach Anspruch 7, worin das Stärkederivat eine Brookfield-Viskosität von 100 bis 300 mPas (cPs) bei 65°C besitzt.

9. Verfahren nach Anspruch 8, worin das Aufnahmeblattsubstrat ein alkalisches Qualitätspapier ist, und die wässerige Dispersion etwa 5 bis 12 Gew.-% des Stärkederivats in Wasser umfaßt.

10. Tintenstrahlaufnahmeblatt, hergestellt durch das Verfahren nach mindestens einem der vorhergehenden Ansprüche.

## Revendications

1. Procédé pour la préparation d'une feuille d'enregistrement par jets d'encre, avec une qualité d'impression par jets d'encre améliorée, comprenant les étapes consistant :
a) à prendre un substrat pour feuille d'enregistrement,
b) à former une composition de collage comprenant une dispersion aqueuse d'un dérivé consistant en un ester d'amidon ou éther d'amidon hydrophobe, dans lequel le substituant ester ou éther comprend une chaîne hydrocarbonée saturée ou insaturée de 6 à 22 atomes de carbone, ayant un degré de substitution (DS) de 0,03 à 0,1, la composition de collage contenant de l'amidon ayant une viscosité Brookfield d'au moins 50 mPa.s (cps) à 65°C et un pH alcalin de 7,5 à 10,5,
c) à appliquer ladite composition de collage audit substrat de feuille d'enregistrement, et
d) à sécher ledit substrat pour produire une feuille d'enregistrement par jets d'encre.

2. Procédé suivant la revendication 1, dans lequel la composition de collage contenant de l'amidon a une viscosité Brookfield de 50 à 500 mPa.s (cps) à 65°C.

3. Procédé suivant la revendication 2, dans lequel la dispersion aqueuse comprend environ 1 à 20 % en poids du dérivé dans de l'eau.

4. Procédé suivant la revendication 1, dans lequel le dérivé d'amidon est un ester préparé à partir d'un anhydride d'acide dicarboxylique cyclique substitué ayant la structure : 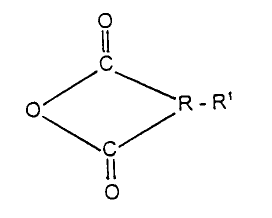 dans laquelle R représente un groupe diméthylène ou triméthylène et R¹ représente un groupe hydrocarboné ayant 6 à 22 atomes de carbone.

5. Procédé suivant la revendication 1, dans lequel le substrat pour feuille d'enregistrement est un substrat en papier.

6. Procédé suivant la revendication 4, dans lequel R¹ représente un groupe alkyle, alcényle, aryle, aralkyle ou aralcényle, le dérivé d'amidon ayant une viscosité Brookfield de 50 à 500 mPa.s (cps) à 65°C et un degré de substitution de 0,03 à 0,07.

7. Procédé suivant la revendication 6, dans lequel R¹ représente un groupe alkyle ou alcényle ayant 8 à 20 atomes de carbone et la dispersion aqueuse comprend environ 1 à 20 % en poids du dérivé d'amidon dans de l'eau.

8. Procédé suivant la revendication 7, dans lequel le dérivé d'amidon a une viscosité Brookfield de 100 à 300 mPa.s (cps) à 65°C.

9. Procédé suivant la revendication 8, dans lequel le substrat pour feuille d'enregistrement est un papier de qualité alcaline et la dispersion aqueuse comprend environ 5 à 12 % en poids du dérivé d'amidon dans de l'eau.

10. Feuille d'enregistrement par jets d'encre préparée par le procédé suivant l'une quelconque des revendications précédentes.
